# EUROPEAN PATENT SPECIFICATION

(11) **EP 1 749 912 B1**
(45) Date of publication and mention of the grant of the patent: **18.06.2008**
(21) Application number: 06117943.8
(22) Date of filing: 27.07.2006
(51) Int. Cl.: D03D 47/20, D03D 47/23, B29C 45/14

(54) **Rapier tape head for rapier looms**
Greiferkopf für eine Greiferwebmaschine
Tête de ruban pour métier à tisser à griffes

(30) Priority: 05.08.2005 IT VI20050224
(43) Date of publication of application: 07.02.2007
(73) Proprietor: Smit S.p.A. - Unipersonale, 36015 SCHIO (Vicenza) (IT)
(72) Inventor: Bortoli, Giulio, 36015, Schio (Vicenza) (IT)
(74) Representative: Iannone, Carlo Luigi

(56) References cited:
- EP-A- 0 893 524
- EP-A1- 0 792 960
- EP-A2- 1 209 267
- FR-A1- 2 541 321

## Description

The present invention refers to a rapier tape head for rapier looms which, having a crest which can be made with any type of appropriate material, also non-thermoplastic, permits obtaining optimal characteristics of rigidity and geometrical linearity for the functionality needs of the gripper-rapier tape assembly in its transverse alternate motion within the shed.

The structure of the rapier tape head according to the invention is also adapted for anchorage the gripper to the rapier tape.

As is known, in rapier looms, each gripper is moved with alternate motion within and outside the shed, formed by warp yarn, by means of a rapier tape generally realised in composite material, on whose head the gripper is fixed.

Different modes of fixing the crest to the rapier tape are known.

They substantially consist in a riveting or screwing of the parts, which however constitute disturbance elements which do not ensure a consistent flatness required by the rapier tape head and do not even ensure the close contact between head and crest, which can create undesired vibrations of the gripper.

In order to overcome the aforesaid drawbacks, a fixing was realised by moulding the crest directly onto the rapier tape head; the crest thus obtained, in close contact with the rapier tape head, is stably connected with the tape head.

Nevertheless, this solution also presents several drawbacks, the main one being that the choice of material with which the crest is realised is limited, since the crest must have specific characteristics of resistance to wear and stiffness.

Moreover, the thermoplastic material, during its solidification or at subsequent times can be deformed, causing a deformation of the crest-rapier tape complex which alters the flatness of the tape itself.

A further solution can consist in the realisation of a pasting of the crest to the tape, but also in this case we are faced with a connection that, in addition to having quality consistency problems, is not adequately effective for the more mechanically difficult performances.

A rapier tape head for rapier weaving looms according to the preamble of claim 1 is known from EP 0 792 960 A1.

Object of the present invention is therefore that of overcoming the abovementioned drawbacks and, in particular, realising an improved rapier tape head for rapier looms whose structure is conformed in such a manner so permit an effective anchorage to the rapier tape surface.

Another object of the present invention is that of realising an improved rapier tape head for rapier looms whose crest can be realised with any material desired.

Another object of the present invention is that of releasing an improved rapier tape head for rapier looms having a form which permits carrying out a "pack" tightening of the assembly formed by the rapier tape, gripper and crest end.

Further object of the invention is that of ensuring an optimum positioning with respect to the traverse paths of the grippers in the shed, even when grippers are used which project below the surface of the rapier tape.

Not last object of the invention is that of realising an improved rapier tape head for rapier looms of simple, compact structure, lacking complex and/or costly mechanical components.

Such objects are achieved by realising an improved rapier tape head for rapier looms, according to the attached claim 1; other characteristics are mentioned in the subsequent claims.

Advantageously, according to the present invention, thermoplastic moulding material is used as connection element for fixing the pre-made crest to the tape head. In such a manner, in fact, the support crest of the rapier can be realised with the most adapted material and form, in order to stiffen the head of the rapier tape, resist wear induced by the yarn, and connect, also in a rigid and reliable manner, the end of the gripper with the head of the rapier tape.

Further characteristics and advantages of an improved rapier tape head for rapier looms according to the present invention shall be more evident from the following description and from the attached drawings, provided as exemplifying but not limiting, wherein:
- Figure 1 shows a perspective view of the rapier tape-gripper assembly, according to the invention;
- Figure 1A shows a lateral view of the rapier tape-gripper assembly according to figure 1;
- Figure 2 shows a perspective view of a detail of the improved rapier tape head for rapier looms, according to a first embodiment of the present invention;
- Figures 3 and 4 show respective details of the improved rapier tape head for rapier looms, according to further embodiments of the present invention;
- Figures 5 and 6 show a lateral view of the rapier tape head, according to the present invention, in the case wherein continuous or localised (interrupted) guide blocks are foreseen.

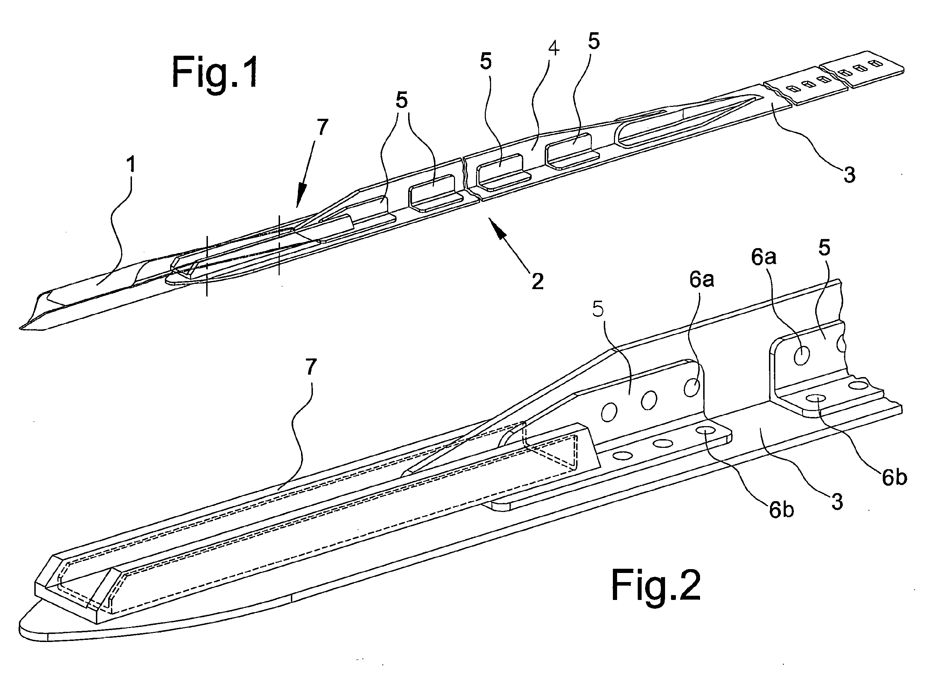

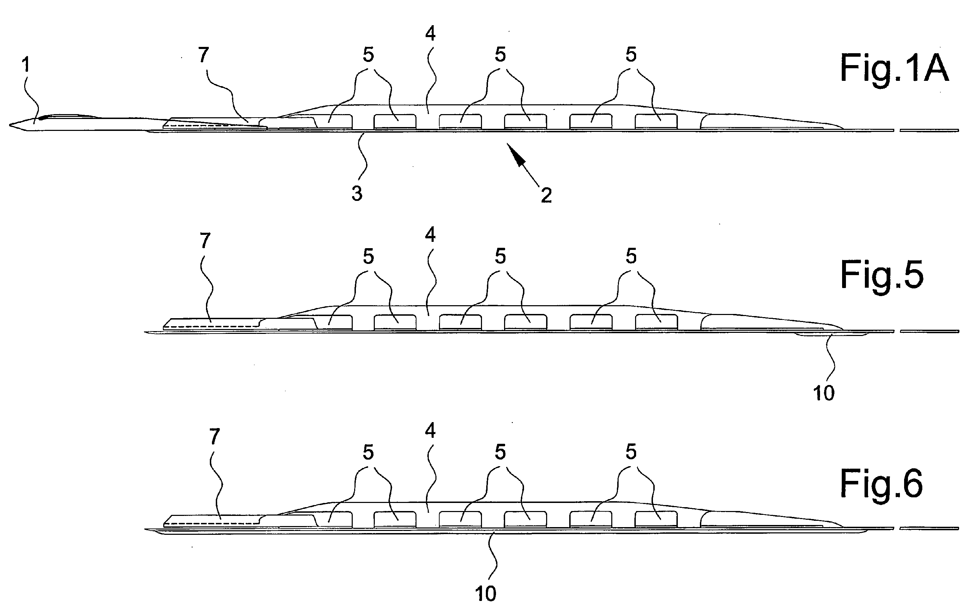

With particular reference to the figures 1 and 1A, a gripper normally used in weaving looms is generically indicated with 1, while the rapier tape is indicated with 3, complete with a rapier tape head 2.

With reference to the figures 2, 3 and 4, with 3 the rapier tape of the weaving loom is indicated, with 4 the crest of the rapier tape 3, with 5 a series of connection elements between the rapier tape 3 and the crest 4, with 6a and 6b the respective anchorage holes of the connection elements 5 between the crest 4 and the rapier tape 3.

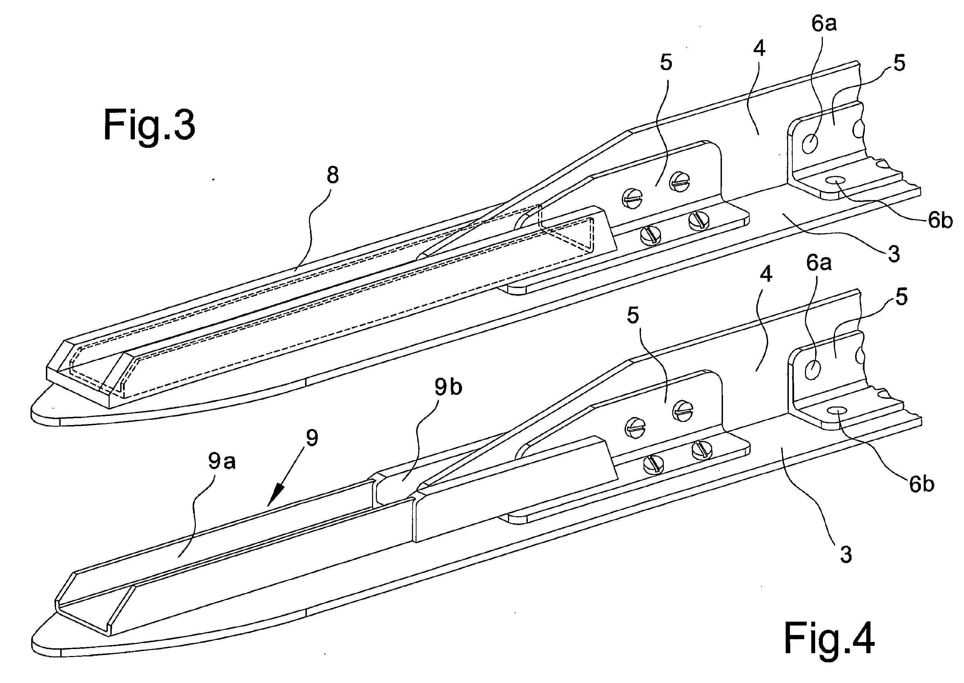

Shown in detail in figure 2 is a first bracket embodiment, indicated with 7, realised by injection on the rapier tape 3; also, in figure 3, a bracket embodiment variant indicated with 8 is shown in inserted version, while in figure 4 a further inserted bracket 9 version is shown, realised in the portions 9a, 9b.

According to the invention, the pre-made crest 4 is fixed to the rapier tape head 3 by means of one or more connection elements 5, which are realised in thermoplastic moulding material by means of injection of the thermoplastic material between the rapier tape 3 and the crest 4.

The injections of thermoplastic material, which constitute the elements 5, are preferably realised in discontinuous portions in order to ensure the final flatness of the rapier tape head 3 after the connection with the crest 4.

In such a manner, the support crest 4 of the gripper can be realised with the most adapted material and form, in order to stiffen the head of the rapier tape 3 and connect the end of the gripper with the head of the rapier tape 3 in a robust and reliable manner.

The prefabricated crest 4 and the tape head 2 are also provided with appropriate anchorage openings or holes 6a, 6b, foreseen at the connection elements 5.

According to exemplifying and preferred embodiments of the present invention, the stiffening crest 4 extends on the rapier tape 3 with a bracket extension 7, 8, 9 with preferably C-shaped section, made in integral plastic material or provided with internal reinforcements, with the central section of the C parallel to the surface of the rapier tape 3 and placed at a distance from it, such to permit the insertion of the gripper 1 surface between the rapier tape 3 and bracket 7, 8, 9. The gripper 1 can thus be rigidly anchored, packed between the rapier tape 3 and the extension of the stiffening crest 4.

The connection bracket, in the embodiments shown in figures 2, 3 and 4 and indicated with 7, 8, and 9, can also be part of the thermoplastic connection injections 5 between the crest 4 and the rapier tape 3, or alternatively can be made separately and subsequently connected to the crest 4 or thermoplastic injections 5 by means of screws, rivets, thermoplastic elements and/or pastes.

In the end, the support crest 4 of the gripper 1, fixed to the rapier tape head 2 by means of the anchorage through holes 6a, 6b, is arranged longitudinally with respect to the underlying rapier tape head 2, in abutment or spaced by a predetermined clearance, and is maintained in a position which is preferably orthogonal to the rapier tape 3 surface, for all or nearly all of its length, by a thermoplastic connection material 5 realised by means of injection moulding, which encloses, with or without interruption, at least part of the prefabricated crest 4 and is inserted in the anchorage holes 6a, 6b of the crest 4 and rapier tape head 2.

The thermoplastic material moreover extends on the upper surface of the rapier tape 3, with or without interruptions, extending cantilevered at a pointed end of the rapier tape 3 with a bracket extension realised by injection 7 or else in an inserted bracket 8; furthermore, the inserted bracket 8 can be composed of various shaped portions 9a, 9b.

In any case, the bracket 7, 8, 9 is parallel to the rapier tape 3 and spaced from it, so to tighten the surface of the gripper 1 between it and the rapier tape 3, in order to insert and rigidly pack/connect together the rapier tape 3, the gripper 1 and the end of the crest 4.

As previously recalled, the bracket extension 7, 8, 9 can furthermore be inserted and attached by means of a connection secured by screws, rivets, thermoplastic elements and/or pastes.

Further characteristic of the invention is formed by the possible presence, in the part below the rapier tape 3, of projecting support and guide blocks 10, localised (interrupted) or continuous (respectively seen in figures 5 and 6), which can be used in cases wherein grippers are attached to the rapier tape head 2 with projecting form with respect to the lower surface of the rapier tape 3; it is thus possible to obtain an optimal positioning of the rapier tape head 2 with respect to the traverse path, along the pathway in the shed.

From the above description, the improved characteristics of the rapier tape head for rapier looms and its advantages are clear.

In the practical actuation of the invention, the materials, forms and size of the illustrated details can be of any type according to needs.

## Claims

1. Rapier tape head (2) for rapier weaving looms comprising at least one stiffening and support crest (4) of a gripper (1), said crest (4) being prefabricated in a predetermined material and being orthogonally fixed to a rapier tape (3) of said rapier tape head (2) along the longitudinal axis of said rapier tape (3) in abutment or spaced by a predetermined clearance, and a plurality of connection elements (5) connected to relative portions of said prefabricated crest (4) and of said rapier tape (3) by means of respective anchorage openings or holes (6a, 6b) provided on said connection elements (5), **characterized by** at least one portion (9a, 9b) of a bracket-shaped extension (7, 8, 9) being attached to at least one of said connection elements (5), so that said bracket-shaped extension (7, 8, 9) is parallel to and spaced from said rapier tape (3), in order to permit the insertion of said gripper (1) between said rapier tape (3) and said bracket-shaped extension (7, 8, 9), said gripper (1) being thus rigidly anchored and packed between said rapier tape (3) and said bracket-shaped extension (7, 8, 9).

2. Rapier tape head (2) as claimed in claim 1, **characterised in that** said connection elements (5) are realised in thermoplastic moulding material by means of injection of said thermoplastic material between said rapier tape (3) and said prefabricated crest (4), said thermoplastic material at least partially enclosing said prefabricated crest (4), extending on said rapier tape head (2) and inserting inside said anchorage openings or holes (6a, 6b) of the prefabricated crest (4) and of the rapier tape head (2).

3. Rapier tape head (2) as claimed in claim 1, **characterised in that** said bracket-shaped extension (7, 8, 9) is realised by injection or by insertion.

4. Rapier tape head (2) as claimed in claim 1, **characterised in that** said bracket-shaped extension (7, 8, 9) has a C-shaped section, the central section of the C being parallel to and spaced from the rapier tape (3).

5. Rapier tape head (2) as claimed in claim 1, **characterised in that** said bracket-shaped extension (7, 8, 9) is realised in integral plastic material or is provided with internal reinforcements.

6. Rapier tape head (2) as claimed in claim 1, **characterised in that** said bracket-shaped extension (7, 8, 9) is formed integrally with at least one of said connection elements (5).

7. Rapier tape head (2) as claimed in claim 1, **characterised in that** said bracket-shaped extension (7, 8, 9) is connected to said prefabricated crest (4) or to said connection elements (5) by means of fixing elements, such as screws, rivets, thermoplastic elements and/or pastes.

8. Rapier tape head (2) as claimed in claim 1, **characterised in that** one or more continuous or localised projecting support and guide blocks (11) are provided below said rapier tape (3), said blocks (11) being adapted to maintain an optimal positioning of said rapier tape head (2) with respect to the traverse path, also in the case of use of grippers (1) projecting from the lower surface of said rapier tape (3).

## Patentansprüche

1. Greiferbandkopf (2) für Greiferwebmaschinen mit mindestens einem Versteifungs- und Trägeroberteil (4) einer Greifeinrichtung (1), wobei das Oberteil (4) aus einem vorbestimmten Material vorgefertigt ist und entlang der Längsachse eines Greiferbands (3) angrenzend oder mit einem vorbestimmten Abstand beabstandet orthogonal an dem Greiferband (3) des Greiferbandkopfs (2) befestigt ist, und mehreren Verbindungselementen (5), die mittels jeweiliger Ankeröffnungen oder -löcher (6a, 6b), die an den Verbindungselementen (5) vorgesehen sind, mit relativen Abschnitten des vorgefertigten Oberteils (4) und des Greiferbands (3) verbunden sind, **dadurch gekennzeichnet, dass** mindestens ein Abschnitt (9a, 9b) einer klammerförmigen Erweiterung (7, 8, 9) an mindestens einem der Verbindungselemente (5) derart angebracht ist, dass die klammerförmige Erweiterung (7, 8, 9) parallel zu dem Greiferband (3) und von diesem beabstandet ist, um das Einsetzen der Greifeinrichtung (1) zwischen dem Greiferband (3) und der klammerförmigen Erweiterung (7, 8, 9) zu ermöglichen, wobei die Greifeinrichtung (1) somit zwischen dem Greiferband (3) und der klammerförmigen Erweiterung (7, 8, 9) starr verankert und gepackt ist.

2. Greiferbandkopf (2) nach Anspruch 1, **dadurch gekennzeichnet, dass** die Verbindungselemente (5) als thermoplastisches Vergussmaterial mittels Einspritzen des thermoplastischen Materials zwischen dem Greiferband (3) und dem vorgefertigten Oberteil (4) realisiert sind, wobei das thermoplastische Material das vorgefertigte Oberteil (4) zumindest teilweise umgibt, sich an dem Greiferbandkopf (2) erstreckt und sich in die Ankeröffnungen oder -löcher (6a, 6b) des vorgefertigten Oberteils (4) und des Greiferbandkopfs (2) setzt.

3. Greiferbandkopf (2) nach Anspruch 1, **dadurch gekennzeichnet, dass** die klammerförmige Erweiterung (7, 8, 9) durch Einspritzen oder durch Einsetzen realisiert ist.

4. Greiferbandkopf (2) nach Anspruch 1, **dadurch gekennzeichnet, dass** die klammerförmige Erweiterung (7, 8, 9) einen C-förmigen Teilabschnitt aufweist, wobei der mittlere Teilabschnitt des C parallel zu dem Greiferband (3) und von diesem beabstandet ist.

5. Greiferbandkopf (2) nach Anspruch 1, **dadurch gekennzeichnet, dass** die klammerförmige Erweiterung (7, 8, 9) als einstückiges Kunststoffmaterial realisiert ist oder mit internen Verstärkungen versehen ist.

6. Greiferbandkopf (2) nach Anspruch 1, **dadurch gekennzeichnet, dass** die klammerförmige Erweiterung (7, 8, 9) mit mindestens einem der Verbindungselemente (5) einstückig ausgebildet ist.

7. Greiferbandkopf (2) nach Anspruch 1, **dadurch gekennzeichnet, dass** die klammerförmige Erweiterung (7, 8, 9) mit dem vorgefertigten Oberteil (4) oder mit den Verbindungselementen (5) mittels Befestigungselementen, wie beispielsweise Schrauben, Nieten, thermoplastischen Elementen und/oder Pasten, verbunden ist.

8. Greiferbandkopf (2) nach Anspruch 1, **dadurch gekennzeichnet, dass** ein oder mehrere durchgehende oder örtlich begrenzte vorstehende Träger- und Führungsblöcke (11) unter dem Greiferband (3) vorgesehen sind, wobei die Blöcke (11) geeignet sind, um eine optimale Positionierung des Greiferbandkopfs (2) in Bezug auf den Querpfad aufrechtzuerhalten, auch in dem Fall einer Verwendung von Greifeinrichtungen (1), die von der Unterseite des Greiferbands (3) vorstehen.

## Revendications

1. Tête de ruban à griffes (2) pour métiers à tisser à griffes comprenant au moins une crête de renforcement et de support (4) d'une griffe (1), ladite crête (4) étant préfabriquée dans un matériau prédéterminé et étant fixée de manière orthogonale à un ruban à griffes (3) de ladite tête de ruban à griffes (2) le long de l'axe longitudinal dudit ruban à griffes (3) en butée ou espacée par un jeu prédéterminé, et une pluralité d'éléments de raccordement (5) raccordés aux parties relatives de ladite crête préfabriquée (4) et dudit ruban à griffes (3) au moyen d'ouvertures ou trous d'ancrage respectifs (6a, 6b) prévus sur lesdits éléments de raccordement (5), **caractérisée par** au moins une partie (9a, 9b) d'une extension en forme de console (7, 8, 9) qui est fixée à au moins l'un desdits éléments de raccordement (5), de sorte que ladite extension en forme de console (7, 8, 9) est parallèle à et espacée dudit ruban à griffes (3) afin de permettre l'insertion de ladite griffe (1) entre ledit ruban à griffes (3) et ladite extension en forme de console (7, 8, 9), ladite griffe (1) étant ainsi ancrée et fixée de manière rigide entre ledit ruban à griffes (3) et ladite extension en forme de console (7, 8, 9).

2. Tête de ruban à griffes (2) selon la revendication 1, **caractérisée en ce que** lesdits éléments de raccordement (5) sont réalisés avec un matériau de moulage thermoplastique au moyen de l'injection dudit matériau thermoplastique entre ledit ruban à griffes (3) et ladite crête préfabriquée (4), ledit matériau thermoplastique enfermant au moins partiellement ladite crête préfabriquée (4), s'étendant sur ladite tête de ruban à griffes (2) et s'insérant à l'intérieur desdites ouvertures ou trous d'ancrage (6a, 6b) de la crête préfabriquée (4) ou de la tête de ruban à griffes (2).

3. Tête de ruban à griffes (2) selon la revendication 1, **caractérisée en ce que** ladite extension en forme de console (7, 8, 9) est réalisée par injection ou par insertion.

4. Tête de ruban à griffes (2) selon la revendication 1, **caractérisée en ce que** ladite extension en forme de console (7, 8, 9) a une section en forme de C, la section centrale du C étant parallèle à et espacée du ruban à griffes (3).

5. Tête de ruban à griffes (2) selon la revendication 1, **caractérisée en ce que** ladite extension en forme de console (7, 8, 9) est réalisée d'une seule pièce en matière plastique ou est prévue avec des renforcements internes.

6. Tête de ruban à griffes (2) selon la revendication 1, **caractérisée en ce que** ladite extension en forme de console (7, 8, 9) est formée d'une seule pièce avec au moins l'un desdits éléments de raccordement (5).

7. Tête de ruban à griffes (2) selon la revendication 1, **caractérisée en ce que** ladite extension en forme de console (7, 8, 9) est raccordée à ladite crête préfabriquée (4) ou auxdits éléments de raccordement (5) au moyen d'éléments de fixation, tels que des vis, des rivets, des éléments thermoplastiques et/ou des colles.

8. Tête de ruban à griffes (2) selon la revendication 1, **caractérisée en ce qu'**un ou plusieurs blocs de guidage et de support continus ou en saillie localisés (11) sont prévus au-dessous de ladite bande à griffes (3), lesdits blocs (11) étant adaptés pour maintenir un positionnement optimal de ladite tête de ruban à griffes (2) par rapport à la trajectoire transversale, également dans le cas de l'utilisation des griffes (1) qui font saillie de ladite surface inférieure dudit ruban à griffés (3).
